# EUROPÄISCHE PATENTSCHRIFT

(11) **EP 1 028 403 B1**
(45) Veröffentlichungstag und Bekanntmachung des Hinweises auf die Patenterteilung: **14.04.2010**
(21) Anmeldenummer: 00102637.6
(22) Anmeldetag: 08.02.2000
(51) Int. Cl.: G08C 17/02

(54) **Datenübertragungssystem, insbesondere zur Verbrauchsdatenerfassung**
Data transmission system, especially for obtaining utility data
Système de communication de données, notamment pour l'acquisition de données de consommation

(30) Priorität: 09.02.1999 DE 19905316
(43) Veröffentlichungstag der Anmeldung: 16.08.2000
(73) Patentinhaber: Ziegler, Horst Prof. Dr., D-33100 Paderborn (DE)
(72) Erfinder: Ziegler, Horst, 33100 Paderborn (DE); Ziegler, Martin Andreas, 33100 Paderborn (DE); Ziegler, Ulrike Claudia, 71065 Sindelfingen (DE); Ziegler, Tobias Irmo, 33100 Paderborn (DE)
(74) Vertreter: Tiesmeyer, Johannes

(56) Entgegenhaltungen:
- WO-A-97/25699
- DE-A1- 4 344 172
- GB-A- 2 183 128
- US-A- 4 761 830
- US-A- 5 617 084

## Beschreibung

Die Erfindung betrifft ein Datenübertragungssystem mit wenigstens einem Sender und einem Empfänger zum Empfang von Datenpaketen, die in Zeitabständen von einem jeweiligen Sender gesendet werden, wobei der Empfänger eine Zeitsteuereinrichtung zur zeitlichen Steuerung seines Empfangsbetriebs aufweist, die dazu eingerichtet ist, auf der Basis von Sollwerten für die Zeitabstände aufeinanderfolgender Datenpakete des betreffenden Senders den jeweiligen Zeitpunkt der erwarteten nächstfolgenden Datensendung des Senders abzuschätzen und den Empfänger zeitweilig jeweils in einem Toleranzzeitintervall, das den geschätzten Zeitpunkt enthält, empfangsbereit zu schalten, um das Datenpaket zu empfangen.

Die Erfindung bezieht sich insbesondere auf die Integration eines derartigen Datenübertragungssystems in ein Verbrauchsdatenerfassungssystem, bei dem Verbrauchsmeßgeräte oder Verbrauchszähler, wie beispielsweise elektronische Heizkostenverteiler, Warmwasserzähler, Wärmemengenzähler oder dgl., an betreffenden Verbrauchsstellen, z.B. in Wohnungen, vorgesehen sind. Bei konventionellen Verbrauchsdatenerfassungssystemen war es erforderlich, daß die Verbrauchsdatenablesung unmittelbar am Verbrauchsmeßgerät durch Ablesepersonal erfolgte. Hierzu war sicherzustellen, daß die zur Ablesung entsandte Person Zugang zu dem betreffenden Verbrauchsmeßgerät z.B. in einer Wohnung erhielt. Die Abstimmung der Ablesetermine mit Wohnungsinhabern hat sich jedoch als zunehmend schwierig erwiesen, da zahlreiche Wohnungsinhaber tagsüber nicht in ihrer Wohnung anzutreffen sind. Zu beachten ist auch, daß viele Wohnungsnutzer Ängste oder Vorbehalte haben, fremden Personen, um die es sich bei den Ablesepersonen normalerweise handelt, Zugang zu ihren Wohnräumen zu gewähren. In einigen Ländern ist der Zugang in die Wohnung zur Verbrauchswertablesung sogar gesetzlich untersagt, so daß die Verbrauchsmeßgeräte bzw. Verbrauchszähler mit entsprechend hohen Kosten dezusätzlichen Leitungsführung im Treppenhaus oder im Keller an zentral zugänglicher Stelle montiert werden müssen.

Die Funkablesung von Verbrauchszählern ist eine Möglichkeit, die Verbrauchsmengeninformationen zurverbrauchsabhängigen Abrechnung auch ohne Betreten der betreffenden Wohnungen zu erhalten. Voraussetzung für eine flächendeckende Einführung der Funkablesung sind aber sehr niedrige Geräte-Mehrkosten für "funkablesbare Verbrauchsmeßgeräte" im Vergleich zu konventionellen Verbrauchsmeßgeräten. Diesbezüglich käme eine nur unidirektionale Funkdatenübertragung von den Verbrauchsmeßgeräten zu einer Daten-Sammelstelle in Frage, da Hochfrequenzsender schaltungstechnisch wesentlich einfacher und daher kostengünstiger zu realisieren sind als empfindliche Empfänger bzw. bidirektionale Systeme. Dazu kommt, daß die Sender dann nur einige Male am Tag, beispielsweise für ca. 30 - 100 ms, aktiv sein müssen, während ein Empfänger nach den bisherigen Überlegungen kontinuierlich empfangsbereit zu sein hätte und daher eine hohe und bisher kaum praktikable Batteriekapazität für eine gewünschte Mindestlebensdauer der Batterie von 5 - 12 Jahren erfordern würde.

Die Daten-Sammelstelle mit zugehörigem Funkempfänger kann die Daten von einer Vielzahl von zugeordneten Verbrauchsmeßgeräten mit jeweiligem Sender aus der Umgebung sammeln und diese dann bis zum Moment der Ablesung zwischenspeichern. Alternativ kann ein solcher Datensammler die Daten auch über ein Modem, über das Funktelefon-Netz o. dgl. an eine Abrechnungszentrale weiterleiten. Eine solche Daten-Sammelstelle mit normalerweise dauernd empfangsbereitem Empfänger erfordert in der Regel einen Netzbetrieb. Der Netzanschluß des Datensammlers mit Empfänger erfordert aber aufwendige Installations- und Sicherungsmaßnahmen.

Bei der Funkablesung von Verbrauchsmeßgeräten besteht eine Möglichkeit darin, daß die mit einem Sender ausgerüsteten Verbrauchsmeßgeräte ihre Verbrauchsmeßinformationen bzw. ihren Zählerstand mehrmals täglich unidirektional und damit unsynchronisiert zu dem stationären Funkempfänger der Datensammelstation senden. Durch den unsynchronisierten Betrieb läßt sich eine gelegentliche Kollision mit Funk-Aussendungen anderer Verbrauchsmeßgeräte oder mit anderen Funkquellen in demselben Frequenzband nicht absolut sicher vermeiden. Da die jeweilige Sendedauer aber sehr kurz (z.B. kleiner als 0,1 s) ist und da nur selten gesendet wird (z.B. fünfmal täglich), ist die Wahrscheinlichkeit einer solchen Kollision selbst in Gegenden dichter Bebauung mit vielen Verbrauchsmeßgeräten innerhalb der Funkreichweite normalerweise vernachlässigbar klein. Um eine Mehrfachkollision mit einem anderen sendenden Verbrauchsmeßgerät zu vermeiden, wird der Sendezeitpunkt üblicherweise stochastisch variiert. Dabei könnte der zuletzt gemessene Verbrauchsmeßwert, z.B. die letzte hochauflösend gemessene Temperatur eines Mediums, als quasistatische Einflußgröße herangezogen werden. Eine geeignetere Methode besteht jedoch darin, daß der stochastische Zeitpunkt von einem algorithmischen pseudo-stochastischen Zahlengenerator bestimmt wird, der im wesentlichen nur die intern gespeicherte möglichst einmalige Zufallscodezahl des - jeweiligen Verbrauchsmeßgerätes als Einflußgröße verwendet. Auf diese Weise kann die Verschiedenheit der stochastischen Zeitintervallfolgen aller Zähler untereinander sichergestellt werden. Sind nun auf Seiten des Datensammlers der Algorithmus, die Zufallscodezahl und der Anfangszeitpunkt des pseudo-stochastischen Generators aller dem Datensammler zugeordneten Verbrauchsmeßgeräte bekannt, so kann auf Seiten des Datensammlers der jeweilige vermutliche Sendezeitpunkt jedes der Verbrauchsmeßgeräte berechnet bzw. abgeschätzt und der zugehörige Empfänger zu diesen Zeitpunkten zeitweilig aktiviert werden. Bei dieser an sich eleganten technischen Lösung tritt jedoch folgendes Problem auf. Jeder der Sender und auch der Empfänger haben jeweils einen eigenen Zeitgeber mit einer eigenen Zeitbasis, die üblicherweise von einem Uhren-Schwingquarz gebildet wird. Aufgrund von Fertigungstoleranzen der eingesetzten Uhren-Schwingquarze und vor allem aufgrund der starken Temperaturabhängigkeitder Frequenz der Uhren-Schwingquarze kann es dazu kommen, daß die Zeitgeber untereinander unterschiedlichen Gang aufweisen. Der Temperatureffekt auf die Zeitgeberfrequenz kann insbesondere bei elektronischen Heizkostenverteilern, Warmwasserzählern und Wärmemengenzählern, die Umgebungstemperaturen von bis zu 80° ausgesetzt sein können, Probleme bereiten, da die instantane Zeitgeberfrequenz und erst recht die daraus akkumulierte Zeit nach Maßgabe der Temperaturschwankungen variieren kann. Gesamtfrequenztoleranzen von ca. 100 ppm sind dabei durchaus möglich. Bei einem mittleren Sendeabstand von ca. 5 Stunden (bei 5 Sendungen pro Tag) bedeutet dies eine Zeitunsicherheit von ca. + /- 2 Sekunden. Berücksichtigt man noch, daß auch die Temperatur der zeitbestimmenden Elemente des Datensammlers und -empfängers schwanken kann, so kann sich die Zeitunsicherheit zwischen dem Zeitsystem eines jeweiligen Senders und dem Zeitsystem des Empfängers noch weiter erhöhen, beispielsweise auf +/-3 Sekunden. Um ein zu einem bestimmten Zeitpunkt erwartetes Datenpaket von einem Sender mit großer Wahrscheinlichkeit empfangen zu können, ist es daher erforderlich, den Empfänger während eines Toleranzzeitintervalls um den vermuteten Zeitpunkt herum empfangsbereit zu halten. Trifft das Datentelegramm bzw. Datenpaket in diesem Toleranzzeitintervall ein, so kann die Zeitzählung empfängerseitig auf den Eintreffzeitpunkt des Datenpakets neu bezogen und somit relativ zum Sender resynchronisiert werden. Auf diese Weise kann eine Akkumulation des Zeitfehlers verhindert werden. Mit den vorstehend angegebenen Beispielswerten für die Zeitunsicherheit und den Sendeabstand ergibt sich für jeden der sendenden Verbrauchsmeßgeräte oder Verbrauchszähler pro Tag eine akkumulierte Empfangsbereitschaftszeit des Empfängers von ca. 20- 30 s. Bei bis zu 100 Verbrauchszählern in der Funkreichweite des Empfängers ergeben sich insgesamt Empfangsbereitschaftszeiten von 2000 - 3000 s pro Tag, also 2 - 4 % der Gesamtzeit. Bei einem typischen Empfängerstrom von ca. 10 mA wäre Batteriebetrieb des Empfängers bei den vorstehend genannten akkumulierten Empfangsbereitschaftszeiten unwirtschaftlich, da erhebliche Batteriekapazitäten erforderlich wären. Eine Alternative könnte bei einer nur monatlich erforderlichen Ablesung sein, den Empfänger z.B. nur am ersten Tag des neuen Monats zu aktivieren, um so Strom zu sparen. Allerdings würde sich dann durch die lange Synchronisationspause von einem Monat die Zeitunsicherheit und damit das Toleranzzeitintervall für den Empfang enorm vergrößern, so daß im Mittel überhaupt keine Stromverbrauchsersparnis eintritt.

Wird das Toleranzzeitintervall für den Empfang aus Stromersparnisgründen nicht lang genug gewählt, so besteht die Gefahr, daß das erwartete Datenpaket nicht empfangen wird. Der Empfänger verpaßt daher diese Sendung und damit auch die Möglichkeit seiner Resynchronisation, so daß er mit hoher Wahrscheinlichkeit auch die nächste und alle folgenden Sendungen verpaßt. Ein "Wiederanfang" würde aber einen Dauerempfangsbetrieb von vielen Stunden erfordern, der im Falle des Batteriebetriebs allenfalls einmal pro Jahr realisierbar wäre. Um einen solchen Synchronisationsverlust sicher zu vermeiden, ist es vorgeschlagen worden, daß man die theoretisch maximale relative Zeittoleranz mit der Zeit seit dem letzten erfolgreichen Empfang multipliziert, um so die Dauer des nächsten Toleranzzeitintervalls zu bestimmen. Die Dauer des Toleranzzeitintervalls nimmt dementsprechend linear mit der Zeit seit dem letzten erfolgreichen Empfang zu.

Aus der DE 43 44 172 A1 ist ein gattungsbildendes Datenübertragungssystem bekannt, das bei Alarmanlagen zu Einsatz kommt. Dabei erfolgt die Korrektur des Zeitpunktes, zu dem eine Statusmeldung erwartet wird durch Addieren einer Zeitabweichung, die als Differenz zwischen dem tatsächlichen Sendezeitpunkt und dem erwarteten Sendezeitpunkt berechnet wird, zu einem ursprünglich erwarteten Zeitpunkt der Statusmeldung. Ein Zeitintervall, während dem ein Empfänger eingeschaltet wird, wird um den korrigierten Zeitpunkt herum positioniert.

Aus der GB 2 183 128 A ist ein Verfahren zur Synchronisation eines Empfängers bei der digitalen Datenübertragung bekannt, bei dem zuerst ein zeitlich breites Fenster aufgemacht wird, um einen Synchronisierimpuls zu finden. Wenn in diesem breiten Fenster ein Synchronisierimpuls gefunden worden ist, werden weitere Fenster geöffnet und von Fenster zu Fenster fortschreitend zeitlich so lange eingeengt, bis sich als Fenster ein Zeitschlitz ergibt, der unter Berücksichtigung der Ungenauigkeit eines Taktgebers etwas breiter als die möglich Abweichung des Synchronisierimpulses ist.

Ferner wird noch auf die Druckschriften US 4,761,830 und US 5,617,084 hingewiesen, die eine Funkfernbedienung für eine Fahrzeugzentralverriegelung bzw. ein Verfahren und ein Gerät zur Funkauslesung von Verbrauchsdaten betreffen.

Der Erfindung liegt die Aufgabe zugrunde, ein Funk-Datenübertragungssystem bereitzustellen, das auch bei unidirektional sendenden Sendern sicherstellt, dass der Empfänger einen möglichst geringen mittleren Strombedarf hat, um auch mit einer praktikablen kleinen Batterie mehrjährige Funktion zu gewährleisten, und dass eine Prognose des nächsten Sende- bzw. Empfangszeitpunktes verbessert wird, wobei das Datenübertragungssystem insbesondere zur Integration in ein Verbrauchsdatenerfassungs- und Verbrauchsdatenabrechnungssystem geeignet sein soll.

Zur Lösung dieser Aufgabe wird ein Datenübertragungssystem mit den Merkmalen des Anspruchs 1 vorgeschlagen. Vorzugsweise wird als Korrekturfaktor der Quotient aus dem tatsächlichen Zeitabstand vom vorletzten zum letzten erfolgreichen Datenempfang im Zeitsystem des Empfängers und dem betreffenden Sollwert-Zeitabstand herangezogen.

Der gemäß Anspruch 1 vorgeschlagenen Lösung liegt die Überlegung zugrunde, daß sich die mittlere Temperatur der zeittaktbestimmenden Elemente, bei denen es sich üblicherweise um Uhren-Schwingquarze handelt, häufig über längere Zeit nur wenig ändert. Aus der Abweichung des Eintreffzeitpunktes des Sendersignals von dem empfängerseitig geschätzten Zeitpunkt kann auf die relative Frequenzabweichung des zeittaktbestimmenden Elementes des jeweiligen Senders von der Frequenz des zeittaktbestimmenden Elementes des Empfängers geschlossen werden. Mit einem solchen "Frequenz-Korrekturfaktor" korrigiert nun die Zeitsteuereinrichtung des Empfängers den empfängerseitig bekannten bzw. berechneten Sollwert für den Zeitabstand vom Empfang des letzten Datenpakets bis zum Zeitpunkt des Empfangs des erwarteten nächsten Datenpakets. Auf diese Weise findet somit nicht nur die empfängerseitige Resynchronisation der Zeitzählung auf den Zeitpunkt des Empfangs des letzten Datenpakets statt, sondern es werden darüber hinaus auch die auf Fertigungstoleranzen, langsame Alterungseffekte und dgl. zurückgehenden Zeitunsicherheiten voll kompensiert, so daß diese in der Festlegung der erforderlichen Dauer des Toleranzzeitintervalls nicht mehr mit berücksichtigt werden müssen. Damit ist, solange sich (wie häufig) die mittlere Temperatur senderseitig und empfängerseitig nicht rasch und extrem ändert, die Prognose des nächsten Sendezeitpunktes/Empfangszeitpunktes bereits wesentlich besser als bei einer reinen Zeitsynchronisation. Dies erlaubt es, daß man das Toleranzzeitintervall zunächst relativ kurz einstellt. Je längere Zeit vergeht seit dem letzten Datenempfang von einem betreffenden Sender, desto größer wird dann aber auch die Wahrscheinlichkeit einer Temperatur- und damit Zeittaktänderung mit der Folge einer sich entsprechend vergrößernden Zeitunsicherheit bezüglich der Abschätzung des Zeitpunktes des erwarteten nächsten Datenpakets. Betrachtet man hinsichtlich der Temperatureffekte auf die zeitbestimmenden Uhren-Schwingquarze in erster Näherung nur lineare Temperaturänderungen, so wird der sich daraus ergebende Zeitfehler quadratisch, also überlinear mit der Zeit wachsen. Dementsprechend sollte das Toleranzzeitintervall ausgehend von einer kleinen Basisbreite mit hoher Empfangswahrscheinlichkeit von z.B. 95 % überlinear mit Zunahme des Zeitabstandes vom letzten Datenempfang bis zum erwarteten nächsten Datenempfang vergrößert werden.

Gemäß einer weiteren Überlegung wird vorgeschlagen, daß die Zeitsteuereinrichtung das Toleranzzeitintervall zeitlich asymmetrisch in bezug auf den jeweiligen geschätzten Empfangszeitpunkt legt, derart, daß der vor dem geschätzten Empfangszeitpunkt kommende Teil des Toleranzzeitintervalls kleiner ist als der nach dem geschätzten Empfangszeitpunkt folgende Teil des Toleranzzeitintervalls. Der Idee des asymmetrischen Zeitfensters im Zusammenhang mit den Bemühungen der Minimierung des mittleren Strombedarfs des Empfängers liegt folgende Überlegung zugrunde. Das jeweils erwartete Datenpaket trifft mit hoher Wahrscheinlichkeit zu dem geschätzten bzw. vorausberechneten Sollzeitpunkt ein. Eine große negative Zeittoleranz im Sinne eines bereits weit vor dem geschätzten Sollzeitpunkt beginnenden Toleranzzeitintervalls würde daher bedeuten, daß der Empfänger in einem dem Sollzeitpunkt vergleichsweise weit vorauseilenden Zeitbereich bereits empfangsbereit gehalten wird, in dem es eher unwahrscheinlich ist, daß das Datenpaket bereits eintrifft. Eine große negative Zeittoleranz ist somit gleichbedeutend damit, daß der Empfänger über den größten Teil der negativen Zeittoleranz mit großer Wahrscheinlichkeit und mit der Folge erhöhten Stromverbrauchs unnötig im Empfangsbereitschaftszustand gehalten wird. Aufgrund der zeitlichen Ausdehnung des jeweiligen Datenpakets und des wahrscheinlichen Eintreffens in der Nähe des Sollzeitpunktes ist es daher wahrscheinlicher, daß die Zeitdauer der Datenübertragung überwiegend in die positive Zeittoleranz, also in den Teil des Toleranzzeitintervalls fällt, der dem Sollzeitpunkt folgt. Da das Nutzsignal z.B. in über 90 % der Fälle vor Ende der positiven Zeittoleranz eintrifft, wirkt nur in den z.B. restlichen 10 % der Fälle eine größere positive Zeittoleranz stromverbrauchserhöhend. Man kann daher vorteilhaft stets ein zum erwarteten Empfangszeitpunkt asymmetrisches Zeitfenster realisieren, bei dem die positive Zeittoleranz wesentlich größer sein kann als die negative Zeittoleranz. Dem Gesichtspunkt des asymmetrischen Toleranzzeitintervalls kann im Rahmen der Erfindung unabhängige Bedeutung, also auch Bedeutung unabhängig von den Merkmalen des kennzeichnenden Teils des Anspruchs 1, zukommen.

Das Datenübertragungssystem nach der Erfindung kann gemäß einer Ausführungsform so betrieben werden, daß die Zeitsteuereinrichtung den Empfänger jeweils für die Dauer des Toleranzzeitintervalls kontinuierlich empfangsbereit schaltet. Dieser kontinuierliche Betrieb ist auch bei Batteriebetrieb des Empfängers praktikabel, da die Toleranzzeitintervalle und somit die Phasen größeren Stromverbrauchs jeweils sehr kurz sind.

Gemäß einem weiteren Gesichtspunkt, dem in Verbindung mit den Merkmalen des Oberbegriffs des Anspruchs 1 selbständige Bedeutung im Rahmen der vorliegenden Erfindung zukommen kann, wird vorgeschlagen, daß die von dem Sender gesendeten Datenpakete einen jeweiligen Header zur Identifizierung aufweisen und daß die Zeitsteuereinrichtung des Empfängers den Empfänger während der Toleranzzeitintervalle jeweils während kurzer Empfangszeitpulse in Zeitabständen kleiner als die Dauer des Headers empfangsbereit schaltet, bis ein betreffender Header vom Empfänger empfangen wird, und daß die Zeitsteuereinrichtung dazu eingerichtet ist, auf den Empfang des Headers und die Erkennung des Headers hin den Empfänger kontinuierlich bis zum Ablauf des Toleranzzeitintervalls empfangsbereit zu halten. Auf diese Weise kann der mittlere Strombedarf des Empfängers ohne Beeinträchtigung der Empfangswahrscheinlichkeit noch weiter reduziert werden.

Bei sämtlichen Ausführungsformen der Erfindung kann es vorgesehen sein, daß die Zeitsteuereinrichtung die Empfangsbereitschaft des Empfängers unmittelbar nach vollständigem Empfang des jeweiligen erwarteten Datenpakets abschaltet, also das Toleranzzeitintervall an dessen Ende abkürzt. Für einen derartigen Betrieb des Datenübertragungssystems nach der Erfindung kann es vorgesehen sein, daß die Sender ihre Datenpakete mit einer End-Kennung oder in einem bestimmten Datenformat senden, so daß empfängerseitig eindeutig festgestellt werden kann, wann ein Datenpaket vollständig empfangen wurde.

Die Toleranzzeitintervalle sind bei dem erfindungsgemäßen Datenübertragungssystem vorzugsweise so gewählt, daß das jeweils erwartete Datenpaket mit einer großen Wahrscheinlichkeit von z.B. 90 % oder 95 % vollständig empfangen wird. Ein Synchronisationsverlust bzw. das Verpassen des jeweiligen Datenpakets ist daher unwahrscheinlich aber nicht völlig auszuschließen. Trifft also das erwartete Datenpaket (mit einer durch die Temperaturänderungsstatistik gegebenen Wahrscheinlichkeit von z.B. < 10 %) doch nicht (oder nur gestört) innerhalb des zunächst sehr kleinen Toleranzzeitintervalls des Empfängers ein, so kann man das Toleranzzeitintervall für einen der nächsten erwarteten Sendezeitpunkte weit überproportional öffnen, und zwar soweit, daß unter Berücksichtigung aller Umstände und insbesondere unter Beachtung der dann längeren Zeit seit dem letzten Empfang mit der Möglichkeit der Resynchronisation das nächste erwartete Datenpaket in dem vergrößerten Toleranzzeitintervall mit großer Wahrscheinlichkeit empfangen werden kann.

Gemäß der vorliegenden Erfindung wird im Hinblick auf die vorstehend angesprochene Problematik zusätzlich vorgeschlagen, daß die Zeitsteuereinrichtung des Empfängers dazu eingerichtet ist, das Toleranzzeitintervall auf einen Wert größer oder gleich dem Produkt aus der theoretisch maximalen relativen Zeittoleranz und der Gesamtzeit zwischen dem letzten erfolgreichen Empfang und dem erwarteten nächsten Empfang einzustellen, falls in einer bestimmten Anzahl aufeinanderfolgender Toleranzzeitintervalle, insbesondere in dem letzten und vorletzten Toleranzzeitintervall, kein erfolgreicher Empfang des erwarteten Datenpakets von dem betreffenden Sender stattgefunden hat.

Vorzugsweise ist die Zeitsteuereinrichtung so programmiert, daß sie nicht sogleich nach einmaligem Nichtempfang das folgende Toleranzzeitintervall auf volle Toleranzbreite setzt, sondern zunächst nur so groß macht, daß mit einer hohen Wahrscheinlichkeit von 90 % oder 95 % ein "Wiederanfang" des Sendesignals innerhalb des folgenden Toleranzzeitintervalls stattfindet. Das Toleranzzeitintervall sollte daher nach einem einmaligen Nichtempfang nur mäßig weit geöffnet werden und erst bei einem auch fehlgeschlagenen weiteren Empfangsversuch so weit geöffnet werden, daß ein Synchronisationsverlust sicher vermieden werden kann.

Das Datenübertragungssystem umfaßt vorzugsweise eine Vielzahl von Sendern, die zu unterschiedlichen Zeitpunkten Datenpakete zum Empfänger senden, wobei die Zeitsteuereinrichtung des Empfängers in bezug auf jeden Sender in der angegebenen Weise Sendezeitpunkte abschätzt und entsprechende Toleranzzeitintervalle einrichtet. Aufgrund der zeitlichen Verteilung der Toleranzzeitintervalle und Sendezeiten ist es möglich, daß sämtliche Sender auf dem gleichen Frequenzkanal senden. Es soll im Rahmen der Erfindung aber auch nicht ausgeschlossen sein, daß jedem Sender ein eigener Kanal zugeordnet ist, auf den der Empfänger jeweils umschaltbar ist.

Die Sender haben Mittel zur zeitlichen Steuerung ihres Sendebetriebs, die die Sendezeitpunkte so legen, daß sie quasistochastisch variieren. Zur Bestimmung des jeweiligen stochastischen Zeitpunktes wird vorzugsweise ein algorithmischer pseudo-stochastischer Zahlengenerator verwendet, der im wesentlichen nur die möglichst einmalige Zufallscodezahl, z.B. eine fortlaufende Fertigungsnummer des jeweiligen Senders oder dem Sender zugeordneten Gerätes, beispielsweise Verbrauchszähler, als Einflußgröße verwendet. Auf diese Weise kann die Verschiedenheit der stochastischen Zeitintervallfolgen aller Sender untereinander sichergestellt werden. Empfängerseitig sind der Algorithmus, die Zufallscodezahl und ihr Einfluß auf diesen Algorithmus und der Anfangszeitpunkt des pseudo-stochastischen Generators aller ihm zugeordneten Sender bekannt, so daß eine Rechnereinrichtung der Zeitsteuereinrichtung des Empfängers jeweils die vermuteten Sendezeitpunkte sämtlicher Sende berechnen kann.

Vorzugsweise ist das Datenübertragungssystem Teil eines Verbrauchsdatenerfassungssystems, wobei die Sender jeweils einzeln einem jeweiligen - Verbrauchsmeßgerät, z.B. elektronischen Heizkostenverteiler, Wasserzähler, Wärmemengenzähler usw., am Installationsort des betreffenden Verbrauchsmeßgeräts zugeordnet und dazu eingerichtet sind, betreffende Verbrauchsdaten in den jeweiligen Datenpaketen zum Empfänger zu senden.

Der Empfänger kann vorzugsweise ebenso wie die Sender batteriebetrieben sein, so daß teure Kabelinstallationen usw. vermieden werden können. Vorzugsweise sind das jeweilige Verbrauchsmeßgerät und der zugehörige Sender zu einer Baueinheit mit gemeinsamem Gehäuse zusammengefaßt. Der Empfänger mit seiner Datenverarbeitungs- und -speichereinrichtung sollte insbesondere an einer zur Ablesung durch eine autorisierte Ableseperson zugänglichen Stelle stationiert sein, beispielsweise in einem Treppenhaus oder Gemeinschafts-Versorgungsraum eines Gebäudes, so daß die einzelnen Wohnungen des Gebäudes nicht mehr betreten werden müssen, um die Verbrauchsdatenerfassung sicherzustellen.

Die Erfindung wird im folgenden unter Bezugnahme auf die Figuren näher erläutert.
- Fig. 1: zeigt in einer schematischen und gemischten Block- und Diagrammdarstellung ein Datenübertragungssystem nach der Erfindung mit einem Überblick über zeitliche Ereignisse bei der Datenübertragung.
- Fig. 2: ist ein Zeitdiagramm zur Erläuterung der empfängerseitigen Abschätzung des Zeitpunktes des erwarteten nächsten Datenpaketes.
- Fig.: 3 zeigt ein Diagramm zur Erläuterung der zeitlichen Abhängigkeit des Toleranzzeitintervalls vom Zeitabstand zwischen dem letzten erfolgreichen Datenempfang zum erwarteten nächsten Datenempfang.
- Fig. 4: zeigt ein Zeitdiagramm zur Erläuterung eines alternativen Empfangsbetriebsmodus.

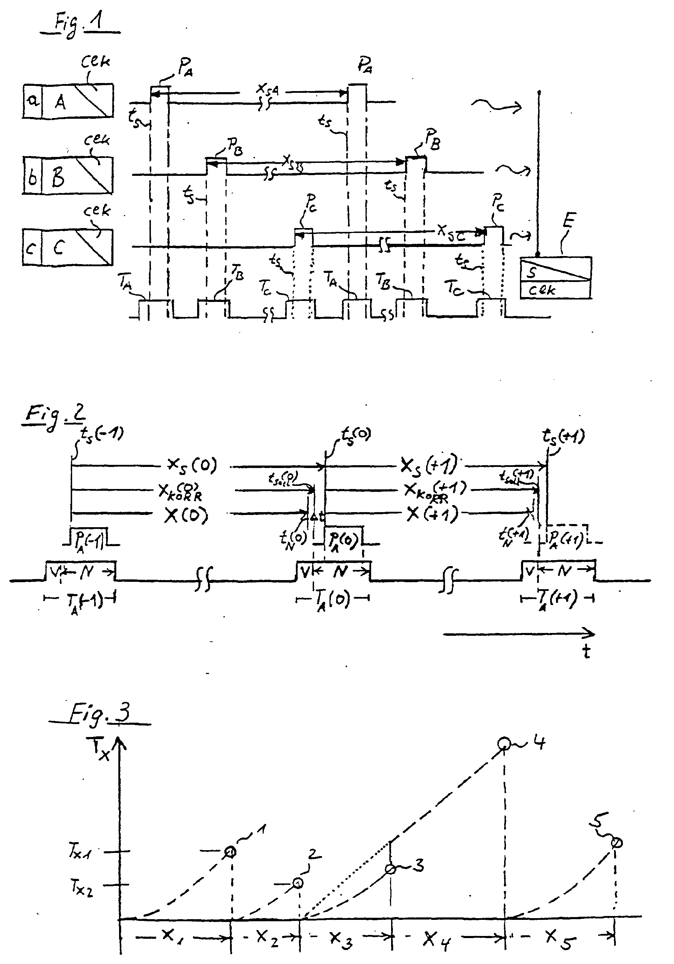

Im Schaubild gemäß Fig. 1 ist in einer schematischen Blockdarstellung ein Datenübertragungssystem dargestellt, welches die Funksender A, B und C und den Empfänger E umfaßt. Im Beispielsfall der Fig. 1 sei angenommen, daß die Funksender A, B und C einem jeweiligen Verbrauchszähler a, b und c, beispielsweise einem elektronischen Heizkostenverteiler, Warmwasserzähler, Wärmemengenzähler oder dgl., zugeordnet und in dessen Nähe angeordnet sind, wobei jeder der Sender A, B und C nach einer Zeitvorschrift Verbrauchsmengeninformationen des betreffenden Verbrauchszählers a, b bzw. c in Form von Datenpaketen sendet, die in der Zeitdiagrammdarstellung in Fig. 1 durch ihre jeweiligen Sendezeitintervalle P_{A}, P_{B} bzw. P_{C} repräsentiert sind. Unter Datenpaket soll im weitesten Sinne jede zeitlich zusammenhängende von einem Sender gesendete Datengruppe verstanden werden. Der zentrale Empfänger E mit zugehöriger Datenverarbeitungs- und -speichereinrichtung dient dazu, die Datenpakete P_{A}, P_{B} und P_{C} jeweils zu empfangen und somit die Verbrauchsinformationen für Verbrauchsabrechnungszwecke zu sammeln. Die Elemente A, B, C und E sind somit Bestandteile eines Verbrauchsdatensammel- und -erfassungssystems, beispielsweise für die Heizkostenverteilung in einem Gebäude. Die in einem Speicher des Empfängers E gesammelten Verbrauchsdaten können für die Verbrauchsdatenerfassung und Verbrauchsabrechnung von autorisierten Personen mittels elektronischer Auslesegeräte ausgelesen oder ggf. unmittelbar an einer Anzeigevorrichtung des Empfängers abgelesen werden. Gemäß einer Variante des Verbrauchsdatenerfassungssystems kann es vorgesehen sein, daß die vom Empfänger E empfangenen Verbrauchsdaten über ein Modem, über das Funktelefon-Netz oder mittels eines anderen Daten-Fernübertragungssystems zur Abrechnungszentrale weitergeleitet werden.

Die Nominalwerte t_{N} der jeweiligen Sendezeitpunkte t_{S}, also die Startzeitpunkte der betreffenden Datenpakete P_{A}, P_{B} bzw. P_{C}, werden im Beispielsfall von einem algorithmischen pseudo-stochastischen Zahlengenerator bestimmt. Die algorithmischen pseudo-stochastischen Zahlengeneratoren der Sender A, B und C unterscheiden sich dadurch, daß der Algorithmus für den Sender A die möglichst einmalige Zufallscodezahl des Verbrauchszählers a als Einflußgröße verwendet, der Algorithmus für den Sender B die möglichst einmalige Zufallscodezahl des Verbrauchszählers b verwendet und der Algorithmus für den Sender C die möglichst einmalige Zufallscodezahl des Verbrauchszählers c verwendet. Auf diese Weise wird die Verschiedenheit der stochastischen Zeitintervallfolgen aller Sender A, B und C untereinander sichergestellt.

Der Empfänger E umfaßt eine Zeitsteuereinrichtung S zur zeitlichen Steuerung seines Empfangsbetriebs. Die Zeitsteuereinrichtung S enthält einen Mikrocomputer, der nach dem Algorithmus der pseudo-stochastischen Zahlengeneratoren der Sender A, B und C die jeweiligen Nominalwerte t_{N} für die Sendezeitpunkte t_{S} berechnet. Die Zeitsteuereinrichtung S schaltet den Empfänger E dann jeweils für ein nachstehend auch als Empfangsbereitschaftszeitintervall T_{A}, T_{B} bzw. T_{C} bezeichnetes Toleranzzeitintervall empfangsbereit, wobei der jeweilige berechnete und in nachstehend noch erläuterter Weise korrigierte nominelle Empfangszeitpunkt an bestimmter zeitlicher Position innerhalb des zugeordneten Empfangsbereitschaftszeitintervalls T_{A}, T_{B} bzw. T_{C} liegt.

Mit anderen Worten, empfängerseitig wird für jeden Sender A, B und C nach dem Algorithmus des pseudo-stochastischen Zahlengenerators der jeweilige theoretische Sendezeitpunkt t_{N} berechnet und korrigiert, so daß der Empfänger E in der zeitlichen Umgebung des jeweiligen korrigierten Zeitpunktes entsprechend der Zeitzählung des empfängerinternen Zeitgebers clk empfangsbereit ist.

Die Empfangsbereitschaftszeitintervalle T_{A}, T_{B} und T_{C} sind in nachstehend noch zu erörternder Weise so lang, daß mit großer Wahrscheinlichkeit das jeweils erwartete Datenpaket P_{A}, P_{B} bzw. P_{C} während des betreffenden Empfangsbereitschaftszeitintervalls vollständig empfangen wird, z. B. mit einer Empfangswahrscheinlichkeit ≥ 90 %.

Zur Verdeutlichung des hier behandelten und vorstehend bereits angesprochenen Problems sei darauf hingewiesen, daß jeder der Sender A, B und C einen eigenen jeweiligen Zeitgeber clk hat, der die Sendezeitpunkte t_{S} bzw. die Zeitabstände X_{S} aufeinanderfolgender Datenpakete nach Maßgabe des vom pseudo-stochastischen Zahlengenerator bereitgestellten nominellen Zeitwerts bestimmt, wobei die Zeitgeber clk der Sender A, B und C und der Zeitgeber clk des Empfängers E nicht ständig synchron zueinander laufen, so daß für die jeweilige empfängerseitige Abschätzung der Sendezeitpunkte t_{S} eine Zeitunsicherheit besteht, die umso größer ist, je mehr die Zeitbasen bzw. zeitbestimmenden Elemente der Zeitgeber der Sender und des Zeitgebers des Empfängers in ihrem Takt voneinander abweichen und je größer die Sendezeitintervalle sind.

Der Empfänger E ist in bezug auf jeden Sender A, B und C dazu eingerichtet, seine Zeitzählung für die Einstellung des Zeitpunktes des Eintreffens des nächsten zu erwartenden Datenpakets vom betreffenden Sender A, B bzw. C zu resynchronisieren, also auf den Zeitpunkt des zuletzt von dem betreffenden Sender empfangenen Datenpakets zu beziehen. Auf diese Weise kann eine Akkumulation des Zeitfehlers verhindert werden.

In Fig. 2 ist ein Zeitdiagramm für aufeinander folgende Sendeereignisse (Datenpakete) P_{A} des Senders A dargestellt, wobei (0) als Index zur Kennzeichnung der Zeiten für das zeitlich letzte Sendeereignis, (-1) als Index für das vorletzte Sendeereignis und (+ 1) als Index für das erwartete nächstfolgende Sendeereignis steht. In Fig. 2 bezeichnet t_{N} empfängerseitig nach gemeinsamer Berechnungsvorschrift für Sender A und Empfänger E berechnete nominelle Empfangszeitpunkte für die betreffenden Datenpakete, t_{S} die davon aufgrund des vorstehend diskutierten Zeitfehlers abweichenden tatsächlichen Empfangszeitpunkte im Zeitsystem des Empfängers, T_{A} das jeweilige Empfangsbereitschaftszeitintervall des Empfängers, X den empfängerseitig abgeschätzten Zeitabstand vom tatsächlichen Zeitpunkt t_{S} des letzten erfolgreichen Datenempfangs bis zum nächsten Zeitpunkt t_{N}. Das gemäß Fig. 2 zuletzt empfangene Datenpaket P_{A}(O) liegt in dem Zeitfenster (Empfangsbereitschaftszeitintervall) T_{A}(O). Der tatsächliche Empfangszeitpunkt t_{S}(O) differiert um den Zeitfehler Δt vom berechneten Nominalzeitpunkt t_{N}(O). Der Zeitabstand X( + 1) zum erwarteten nächsten Datenpaket P_{A}( + 1) wird empfängerseitig nach gemeinsamer Berechnungsvorschrift für Sender A und Empfänger E berechnet, also nach Maßgabe des für den Sender A geltenden Algorithmus des pseudo-stochastischen Zahlengenerators. Der Beginn dieses Zeitabstandes X( + 1) wird empfängerseitig mit dem tatsächlichen Empfangszeitpunkt t_{S}(O) des letzten Datenpaketes P_{A}(O) synchronisiert, so daß das Ende dieses Zeitabstandes X( + 1) den nominellen Zeitpunkt t_{N}( + 1) für den Beginn der erwarteten nächsten Datenübertragung darstellt.

Erfindungsgemäß wird dieser empfängerseitig jeweils berechnete Zeitabstand X noch mit einem Korrekturfaktor gewichtet, um die Abschätzung des Zeitpunktes t_{S} des tatsächlichen Datenempfangs zu verbessern. Je besser der jeweils folgende Zeitpunkt t_{S} der erwarteten nächsten Datenübertragung abgeschätzt werden kann, umso kleiner kann das zugeordnete Empfangsbereitschaftszeitintervall T_{A} eingestellt werden, was bedeutet, daß der Empfänger E im Zeitmittel weniger elektrische Energie benötigt und man daher mit vergleichsweise kleinen preiswerten Batterien für die Versorgung des Empfängers auskommt.

In den Korrekturfaktor geht das Verhältnis aus dem tatsächlichen Zeitabstand X_{S}(O) = t_{S}(O) - t_{S}(-1) zu dem nominellen Zeitabstand X(O) = t_{N}(O)-t_{S}(-1) ein. Vorzugsweise entspricht der Korrekturfaktor (K) dem Quotienten aus X_{S}(O) und X(0), so daß der Zeitabstand zum nächsten tatsächlichen Empfangszeitpunkt t_{S}(+1) abgeschätzt wird, indem man X(+1) mit K multipliziert, also X_{KORR}(+ 1) = X(+ 1) · X_{S}(O)/X(O) bildet und X_{KORR} zum tatsächlichen Zeitpunkt t_{S}(O) des letzten Datenempfangs hinzuaddiert, um einen verbesserten Schätzwert t_{SOLL}(+1) zu erhalten. Diese Schätzung ist umso besser, je weniger und langsamer die zeittaktbestimmenden Elemente der Zeitgeber des Senders und des Empfängers in ihren Taktfrequenzen schwanken, etwa aufgrund von Temperaturschwankungen. Der Erfindung liegt insoweit die Idee zugrunde, daß aus der Abweichung des Zeitpunktes des tatsächlichen Empfangs des Signals vom Sender von dem erwarteten Zeitpunkt auf die relative Frequenzabweichung des Zeitgebers des betreffenden Senders von der Frequenz des Zeitgebers des Empfängers geschlossen werden kann. Bei der vorstehend angesprochenen Korrektur mit dem Korrekturfaktor K wird dieser relativen Frequenzabweichung Rechnung getragen.

In Fig. 2 sind die Empfangsbereitschaftszeitintervalle T_{A} in die Zeitanteile V und N unterteilt dargestellt, wobei V den zeitlichen Anteil des Empfangsbereitschaftszeitintervalls T_{A} bezeichnet, der vor dem geschätzten Sendezeitpunkt t_{SOLL}(O) liegt, und wobei N den nach diesem geschätzten Sendezeitpunkt t_{SOLL}(O) liegenden Zeitanteil des Empfangsbereitschaftszeitintervalls T_{A} darstellt. V kann auch als negative Zeitfenstertoleranz bezeichnet werden, wohingegen N dann die positive Zeitfenstertoleranz wäre.

Vorzugsweise ist die Zeitsteuereinrichtung S des Empfängers E dazu eingerichtet bzw. programmiert, daß sie das jeweilige Zeitfenster T_{A} relativ zu dem zugeordneten abgeschätzten Sendezeitpunkt t_{SOLL}(O) so legt, daß die negative Zeitfenstertoleranz V kleiner ist als die positive Zeitfenstertoleranz N, wobei das Verhältnis von V zu N zum Beispiel 1 : 3 betragen kann. Es handelt sich somit bei den Empfangsbereitschaftszeitintervallen T_{A} um asymmetrische Empfangszeitfenster in bezug auf den jeweils zugehörigen abgeschätzten Sendezeitpunkt/Empfangszeitpunkt t_{SOLL}.

Was die Dauer der jeweiligen Empfangsbereitschaftszeitintervalle T_{A} anbetrifft, so ist die Zeitsteuereinrichtung S des Empfängers E im Beispielsfall dazu eingerichtet und programmiert, die jeweilige Dauer des nächstfolgenden Empfangsbereitschaftszeitintervalls (Empfangszeitfensters) in Abhängigkeit von der Zeit X oder X_{KORR} seit dem letzten erfolgreichen Empfang eines Datenpaketes einzustellen, und zwar so, daß die Breite des jeweiligen Empfangszeitfensters in Abhängigkeit von der Zeit X bzw. X_{KORR} überlinear, z.B. quadratisch zunimmt, ausgehend von einer Basisbreite, die bei Anwendung der oben erläuterten korrigierten Abschätzung des Zeitpunktes T_{SOLL} relativ klein gehalten sein kann.

Fig. 3 zeigt für fünf aufeinanderfolgende Sendezeitpunkte eines Senders die jeweilige Breite T_{X} des Empfangszeitfensters nach den Zeitabständen X1, X2, X3, X4, X5. Nach erfolgreichem Datenempfang im letzten Zeitfenster erhält das nächste Zeitfenster nach dem Zeitabstand X1 die Breite T_{X1}, wobei gestrichelt die überlineare - hier quadratische - Abhängigkeit der Zeitfensterbreite von der Zeit zwischen zwei jeweiligen Sendeereignissen zeichnerisch angedeutet ist.

Ist das nach dem Zeitabstand X1 erwartete Datenpaket in dem Zeitfenster 1 erfolgreich empfangen worden, so berechnet die Zeitsteuereinrichtung S des Empfängers E die Breite T_{X2} des nächsten Empfangszeitfensters 2 nach dem Zeitabstand X2 usw. Im Beispielsfall sei angenommen, daß in dem Zeitfenster 3 nach dem Zeitabstand X3 kein erfolgreicher Datenempfang stattgefunden hat. In diesem Fall sorgt die Zeitsteuereinrichtung S dafür, daß das nächstfolgende Empfangszeitfenster 4 über die sich aus der quadratischen Zeitabhängigkeit ergebende Breite hinaus aufgeweitet wird. Die Vergrößerung der Empfangsfensterbreite kann in diesem Fall beispielsweise auf das Produkt aus maximaler relativer Zeit-Toleranz mal der Gesamtzeit zwischen dem letzten erfolgreichen Empfang und dem nächsten erwarteten Empfang des betreffenden Senders vorgenommen werden.

Gemäß dem Diagramm nach Fig. 3 sei angenommen, daß in dem Zeitfenster 4 wieder ein erfolgreicher Datenempfang stattgefunden hat, so daß für das Zeitfenster 5 die Zeitfensterbreite T_{X} wieder nach der quadratischen Abhängigkeit vom Zeitabstand X eingestellt werden kann.

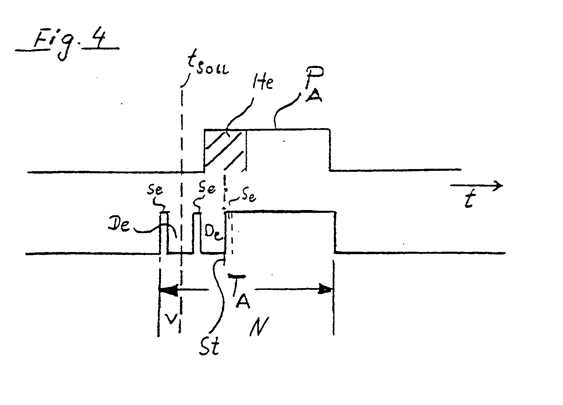

Bei den bisherigen Betrachtungen wurde davon ausgegangen, daß der Empfänger E während eines betreffenden Empfangsbereitschaftszeitintervalls T_{A}, T_{B} oder T_{C} kontinuierlich empfangsbereit geschaltet war. Eine von dem Konzept der kontinuierlichen Empfangsbereitschaft abweichende Ausgestaltung der Erfindung wird nachstehend anhand der Zeitdiagramme in Fig. 4 erläutert, wobei sich die Betrachtungen der Einfachheit halber weiterhin auf nur einen der Sender, nämlich den Sender A beziehen. Für die Sender B und C gelten wie zuvor die Erläuterungen entsprechend.

Bei der unter Bezugnahme auf Fig. 4 betrachteten Ausführungsform sendet der Sender A das jeweilige Datenpaket P_{A} mit einem strukturierten Header He. Der Empfänger E ermittelt nach den bereits beschriebenen Schätz- und Korrekturoperationen die zeitliche Lage und Breite des nächstfolgenden Empfangsbereitschaftszeitintervalls oder Zeitfensters T_{A}. Nach Beginn dieses Zeitfensters T_{A} bleibt der Empfänger E jedoch nicht kontinuierlich über die gesamte Dauer des Zeitfensters T_{A} empfangsbereit, sondern zunächst nur während vergleichsweise kurzer Header-Suchpulse Se mit dazwischenliegenden Totzeiten De, in denen keine Empfangsbereitschaft vorliegt. Die Zeitsteuereinrichtung S des Empfängers E prüft bei jedem Header-Suchimpuls Se, ob das Header-Signal empfangen wurde. In dem Beispielsfall gemäß Fig. 4 waren die ersten beiden Header-Suchimpulse Se erfolglos. Bei dem dritten Suchimpuls Se hat der Empfänger E den Header He erkannt und daraufhin auf kontinuierliche Empfangsbereitschaft umgeschaltet, um die Nutzdaten des Datenpaketes P_{A} vollständig zu empfangen. Der Zeitabstand (De + Se) aufeinanderfolgender Header-Suchimpulse Se ist geringfügig kleiner als die Dauer des Headers He. Falls der Header He gleich beim ersten Header-Suchimpuls erkannt wird, liegt der Sonderfall vor, daß auch bei der hier betrachteten Ausführungsform kontinuierliche Empfangsbereitschaft über das gesamte Zeitfenster T_{A} stattfindet.

Beispielswerte für die in Fig. 4 gezeigten Zeitgrößen könnten sein:
P_{A} ≈ 100 ms, He ≈ 35 ms, Se ≈ 3 ms, De ≈ 28 ms, T_{A} ≈ 200 ms.

Die vorstehend erläuterte Methode der zunächst "gepulsten" Empfangsbereitschaft des Empfängers E innerhalb eines Zeitfensters T_{A} bis zur Header-Erkennung wird auch als "Blinzel-Verfahren" bezeichnet. Dieses Blinzel-Verfahren ermöglicht eine noch weitergehende Reduzierung des mittleren Strombedarfs des Empfängers E. Andererseits erlaubt das Blinzel-Verfahren eine großzügigere Bemessung des Toleranzzeitintervalls, beispielsweise im "Suchmodus", nachdem der letzte und ggf. weitere Empfangsversuche erfolglos waren. Dem Gesichtspunkt "Blinzel-Verfahren" kann im Rahmen der vorliegenden Erfindung selbständige Bedeutung zukommen.

Das vorstehend beschriebene Datenübertragungssystem in Gestalt eines Verbrauchsdatensammel- und -erfassungssystems kann sowohl empfängerseitig als auch senderseitig batteriebetrieben sein, da die stromkonsumptiven Ereignisse jeweils sehr kurz gehalten werden können.

## Patentansprüche

1. Datenübertragungssystem mit wenigstens einem Sender (A, B, C) und einem Empfänger (E) zum Empfang von Datenpaketen (P_{A}, P_{B}, P_{C}), die in Zeitabständen (X_{S}) von einem jeweiligen Sender (A, B, C) gesendet werden, wobei der Empfänger (E) eine Zeitsteuereinrichtung (S) zur zeitlichen Steuerung seines Empfangsbetriebs aufweist, die dazu eingerichtet ist, auf der Basis von Sollwerten (X) für die Zeitabstände aufeinanderfolgender Datenpakete (P_{A}, P_{B}, P_{C}) des betreffenden Senders (A, B, C) den jeweiligen Zeitpunkt der erwarteten nächstfolgenden Datensendung des Senders (A, B, C) abzuschätzen und den Empfänger (E) zeitweilig jeweils in einem Toleranzzeitintervall (T_{A}, T_{B}, T_{C}), das den geschätzten Zeitpunkt enthält, empfangsbereit zu schalten, um das Datenpaket (P_{A}, P_{B}. P_{C}) zu empfangen, wobei
die Zeitsteuereinrichtung (S) zur Abschätzung des Zeitpunktes der jeweils erwarteten nächsten Datensendung des betreffenden Senders (A, B, C) dazu eingerichtet ist, den jeweiligen aktuellen Sollwert (X( + 1)) für den Zeitabstand von der letzten Datensendung zur erwarteten nächsten Datensendung des betreffenden Senders (A, B, C) mit einem Korrekturfaktor zu korrigierren **dadurch gekennzeichnet, dass** der Korrekturfaktor, von dem Verhältnis aus dem tatsächlichen Zeitabstand (X_{S}(O)) zu dem Sollwert-Zeitabstand (X(0)) vom vorletzten zum letzten Datenempfang von dem Sender abhängt, und
daß die Zeitsteuereinrichtung (S) dazu eingerichtet ist, die Dauer des Toleranzzeitintervalls (T_{A}, T_{B}, T_{C}) für den Empfang eines erwarteten nächsten Datenpaketes (P_{A}, P_{B}, P_{C}) von dem betreffenden Sender (A, B, C) in Abhängigkeit von dem Zeitabstand vom letzten erfolgreichen Empfang eines Datenpakets (P_{A}, P_{B}, P_{C}) von dem Sender bis zum erwarteten Empfang des nächsten Datenpaketes festzulegen, und zwar im Sinne einer Verlängerung der Dauer des Toleranzzeitintervalls (T_{A}, T_{B}, T_{C}) bei Vergrößerung des Zeitabstandes,
wobei die Dauer des Toleranzzeitintervalls (T_{A}, T_{B}, T_{C}) in Abhängigkeit vom Zeitabstand vom letzten erfolgreichen Datenempfang bis zum erwarteten nächsten Datenempfang von einem betreffenden Sender überlinear zunimmt.

2. Datenübertragungssystem nach Anspruch 1, **dadurch gekennzeichnet, daß** der Korrekturfaktor der Quotient aus dem tatsächlichen Zeitabstand (X_{S}(O)) vom vorletzten zum letzten erfolgreichen Datenempfang und dem betreffenden Sollwert-Zeitabstand (X(O)) ist.

3. Datenübertragungssystem nach einem der vorhergehenden Ansprüche, **dadurch gekennzeichnet, daß** die Zeitsteuereinrichtung (S) das Toleranzzeitintervall (T) zeitlich asymmetrisch in bezug auf den jeweiligen geschätzten Empfangszeitpunkt (t_{SOLL}) legt, derart, daß der vor dem geschätzten Empfangszeitpunkt (t_{SOLL}) kommende Teil (V) des Toleranzzeitintervalls (T) kleiner ist als der nach dem geschätzten Empfangszeitpunkt (t_{SOLL}) folgende Teil (N) des Toleranzzeitintervalls (T).

4. Datenübertragungssystem nach einem der vorhergehenden Ansprüche, **dadurch gekennzeichnet, daß** die Zeitsteuereinrichtung (S) den Empfänger (E) jeweils für die Dauer des Toleranzzeitintervalls (T) kontinuierlich empfangsbereit schaltet.

5. Datenübertragungssystem nach einem der Ansprüche 1 - 3, **dadurch gekennzeichnet, daß** die von dem Sender (A, B, C) gesendeten Datenpakete (P_{A}, P_{B}, P_{C}) einen jeweiligen Header (He) aufweisen und daß die Zeitsteuereinrichtung (S) des Empfängers (E) den Empfänger während der Toleranzzeitintervalle (T) jeweils während kurzer Empfangszeitpulse (Se) in Zeitabständen kleiner als die Dauer des Headers (He) empfangsbereit schaltet, bis ein betreffender Header (He) vom Empfänger (E) empfangen wird, und daß die Zeitsteuereinrichtung (S) dazu eingerichtet ist, auf den Empfang des Headers (He) hin den Empfänger (E) kontinuierlich bis zum Ablauf des Toleranzzeitintervalls (T) empfangsbereit zu halten.

6. Datenübertragungssystem nach einem der vorhergehenden Ansprüche, **dadurch gekennzeichnet, daß** die Zeitsteuereinrichtung (S) des Empfängers (E) dazu eingerichtet ist, das Toleranzzeitintervall (T) auf einen Wert größer oder gleich dem Produkt aus einer maximalen relativen Zeittoleranz und der Gesamtzeit zwischen dem letzten erfolgreichen Empfang und dem erwarteten nächsten Empfang einzustellen, falls in einer bestimmten Anzahl aufeinanderfolgender Toleranzzeitintervalle, insbesondere in dem letzten und vorletzten Toleranzzeitintervall, kein erfolgreicher Empfang des erwarteten Datenpakets (P_{A}, P_{B}, P_{C}) von dem betreffenden Sender (A, B, C) stattgefunden hat.

7. Datenübertragungssystem nach einem der vorhergehenden Ansprüche, **dadurch gekennzeichnet, daß** es mehrere Sender (A, B, C) umfaßt, welche dazu eingerichtet sind, daß sie untereinander zu unterschiedlichen Zeitpunkten Datenpakete (P_{A}, P_{B}, P_{C}) zum Empfänger (E) senden, wobei die Zeitsteuereinrichtung (S) des Empfängers (E) in bezug auf jeden Sender (A, B, C) Sendezeitpunkte (t_{SOLL}) abschätzt und entsprechende Toleranzzeitintervalle (T_{A}, T_{B}, T_{C}) einrichtet.

8. Datenübertragurigssystem nach Anspruch 7, **dadurch gekennzeichnet, daß** die Sender (A, B, C) Mittel zur zeitlichen Steuerung ihres Sendebetriebs aufweisen, die die Sendezeitpunkte so legen, daß sie quasistochastisch variieren.

9. Datenübertragungssystem nach einem der vorhergehenden Ansprüche, **dadurch gekennzeichnet, daß** es Teil eines Verbrauchsdatenerfassungs- und Verbrauchsabrechnungssystems ist, wobei die Sender (A, B, C) jeweils einzeln einem jeweiligen Verbrauchsmeßgerät (a, b, c), z.B. elektronischen Heizkostenverteiler, Wasserzähler, Wärmemengenzähler usw., am Installationsort des betreffenden Verbrauchsmeßgeräts zugeordnet und dazu eingerichtet sind, betreffende Verbrauchsdaten in den jeweiligen Datenpaketen zum Empfänger zu senden.

10. Empfänger eines Datenübertragungssystems zum Empfang von Datenpaketen (P_{A}, P_{B}, P_{C}), die in Zeitabständen (X_{S}) von einem jeweiligen Sender (A, B, C) gesendet werden, wobei der Empfänger (E) eine Zeitsteuereinrichtung (S) zur zeitlichen Steuerung seines Empfangsbetriebs aufweist, die dazu eingerichtet ist, auf der Basis von Sollwerten (X) für die Zeitabstände aufeinanderfolgender Datenpakete (P_{A}, P_{B}, P_{C}) des betreffenden Senders (A, B, C) den jeweiligen Zeitpunkt der erwarteten nächstfolgenden Datensendung des Senders (A, B, C) abzuschätzen und den Empfänger (E) zeitweilig jeweils in einem Toleranzzeitintervall (T_{A}, T_{B}, T_{C}), das den geschätzten Zeitpunkt enthält, empfangsbereit zu schalten, um das Datenpaket (P_{A}, P_{B}, P_{C}) zu empfangen, wobei
die Zeitsteuereinrichtung (S) zur Abschätzung des Zeitpunktes der jeweils erwarteten nächsten Datensendung des betreffenden Senders (A, B, C1 dazu eingerichtet ist, den jeweiligen aktuellen Sollwert (X( + 1)) für den Zeitabstand von der letzten Datensendung zur erwarteten nächsten Datensendung des betreffenden Senders (A, B, C) mit einem Korrekturfaktor zu korrigieren, **dadurch gekennzeichnet, dass** der Korrekturfaktor von dem Verhältnis aus dem tatsächlichen Zeitabstand (X_{S}(O)) zu dem Sollwert-Zeitabstand (X(O)) vom vorletzten zum letzten Datenempfang von dem Sender abhängt, und
daß die Zeitsteuereinrichtung (S) dazu eingerichtet ist, die Dauer des Toleranzzeitintervalls (T_{A}, T_{B}, T_{C}) für den Empfang eines erwarteten nächsten Datenpaketes (P_{A}, P_{B}, P_{C}) von dem betreffenden Sender (A, B, C) in Abhängigkeit von dem Zeitabstand vom letzten erfolgreichen Empfang eines Datenpakets (P_{A}, P_{B}, P_{C}) von dem Sender bis zum erwarteten Empfang des nächsten Datenpaketes festzulegen, und zwar im Sinne einer Verlängerung der Dauer des Toleranzzeitintervalls (T_{A}, T_{B}, T_{C}) bei Vergrößerung des Zeitabstandes, wobei
die Dauer des Toleranzzeitintervalls (T_{A}, T_{B}, T_{C}) in Abhängigkeit vom Zeitabstand vom letzten erfolgreichen Datenempfang bis zum erwarteten nächsten Datenempfang von einem betreffenden Sender überlinear zunimmt.

## Claims

1. Data transmission system with at least one transmitter (A, B, C) and one receiver (E) for receiving data packets (P_{A}, P_{B}, P_{C}), which are transmitted at time intervals (X_{S}) by a respective transmitter (A, B, C), wherein the receiver (E) comprises a time control device (S) for controlling the timing of its receiving operation, which device is set up to estimate on the basis of reference values (X) for the time intervals of consecutive data packets (P_{A}, P_{B}, P_{C}) of the relevant transmitter (A, B, C) the respective time point of the expected next data transmission of the transmitter (A, B, C), and to switch the receiver (E) to be ready to receive temporarily in a tolerance time interval (T_{A}, T_{B}, T_{C}), which contains the estimated time point, in order to receive the data packet (P_{A}, P_{B}, P_{C}),
wherein the time control device (S) is set up for estimating the time point of the expected next data transmission of the relevant transmitter (A, B, C) to correct the respective current reference value (X(+1)) for the time interval from the last data transmission to the expected next data transmission of the relevant transmitter (A, B, C) with a correction factor,
**characterised in that**
the correction factor depends on the ratio of the actual time interval (X_{S}(0)) to the reference value time interval (X(O)) from the penultimate to the last data reception from the transmitter, and
**in that** the time control device (S) is set up to determine the duration of the tolerance time interval (T_{A}, T_{B}, T_{C}) for receiving an expected next data packet (P_{A}, P_{B}, P_{C}) from the relevant transmitter (A, B, C) depending on the time interval from the last successful reception of a data packet (P_{A}, P_{B}, P_{C}) from the transmitter to the expected reception of the next data packet, and in the sense of a extension of the duration of the tolerance time interval (T_{A}, T_{B}, T_{C}) on an increase in the time interval,
wherein the duration of the tolerance time interval (T_{A}, T_{B}, T_{C}) increases linearly depending on the time interval from the last successful data reception to the expected next data reception from a relevant transmitter.

2. Data transmission system according to claim 1, **characterised in that** the correction factor is the quotient of the actual time interval (X_{S}(O)) from the penultimate to the last successful data reception and the relevant reference value time interval (X(O)).

3. Data transmission system according to one of the preceding claims, **characterised in that** the time control device (S) places the tolerance time interval (T) asymmetrically in time relative to the respective, estimated receiving time point (t_{REF}), such that the part (V) of the tolerance time interval (T) coming from the estimated reception time point (t_{REF}) is smaller than the part (N) of the tolerance time interval (T) following the estimated reception time point (t_{REF}).

4. Data transmission system according to one of the preceding claims, **characterised in that** the time control device (S) switches the receiver (E) to be continually ready to receive for the duration of the tolerance time interval (T).

5. Data transmission system according to one of claims 1 to 3, **characterised in that** the data packets (P_{A}, P_{B}, P_{C}) transmitted by the transmitter (A, B, C) comprise a header (He) respectively, and **in that** the time control device (S) of the receiver (E) switches the receiver to be ready to receive during the tolerance time intervals (T) respectively during short reception time pulses (Se) at time intervals that are smaller than the duration of the header (He), until a relevant header (He) is received by the receiver (E), and **in that** the time control device (S) is set up to keep the receiver (E) continually ready to receive until the expiry of the tolerance time interval (T) on the reception of the header (He).

6. Data transmission system according to one of the preceding claims, **characterised in that** the time control device (S) of the receiver (E) is set up to set the tolerance time interval (T) to be one value greater or equal to the product of a maximum relative time tolerance and the total period between the last successful reception and the expected next reception, in case in a specific number of consecutive tolerance time intervals, in particular in the last and penultimate tolerance time interval, there was no successful reception of the expected data packet (P_{A}, P_{B}, P_{C}) from the relevant transmitter (A, B, C).

7. Data transmission system according to one of the preceding claims, **characterised in that** it comprises several transmitters (A, B, C), which are set up so that they transmit data packets (P_{A}, P_{B}, P_{C}) to the receiver (E) at different time points, wherein the time control device (S) of the receiver (E) estimates transmission time points (t_{REF}) relevant to each transmitter (A, B, C) and sets up corresponding tolerance time intervals (T_{A}, T_{B}, Tc).

8. Data transmission system according to claim 7, **characterised in that** the transmitters (A, B, C) comprise means for controlling the timing of their transmission operation which set the transmission times so that they vary stochastically.

9. Data transmission system according to one of the preceding claims, **characterised in that** it is part of a consumption data detecting and consumption calculating system, wherein the transmitters (A, B, C) are assigned individually to a respective consumption measuring device (a, b, c), e.g. electronic heat cost distributor, water meter, heat quantity meter etc., at the installation site of the respective consumption measuring device and are set up to transmit relevant consumption data in the respective data packets to the receiver.

10. Receiver of a data transmission system for receiving data packets (P_{A}, P_{B}, P_{C}), which are transmitted at time intervals (X_{S}) by a respective transmitter (A, B, C), wherein the receiver (E) comprises a time control device (S) for controlling the timing of its receiving operation, which device is set up to estimate on the basis of reference values (X) for the time intervals of consecutive data packets (P_{A}, P_{B}, P_{C}) of the relevant transmitter (A, B, C) the respective time point of the expected next data transmission of the transmitter (A, B, C), and to switch the transmitter (E) to be ready to receive temporarily in a tolerance time interval (T_{A}, T_{B}, T_{C}), which contains the estimated time point, in order to receive the data packet (P_{A}, P_{B}, P_{C}),
wherein the time control device (S) is set up for estimating the time point of the expected next data transmission of the respective transmitter (A, B, C) to correct the respective current reference value (X(+1)) for the time interval from the last data transmission to the expected next data transmission of the respective transmitter (A, B, C) with a correction factor, **characterised in that**
the correction factor depends on the ratio of the actual time interval (X_{S}(0)) to the reference value time interval (X(0)) from the penultimate to the last data reception from the transmitter, and
**in that** the time control device (S) is set up to determine the duration of the tolerance time interval (T_{A}, T_{B}, T_{C}) for receiving an expected next data packet (P_{A}, P_{B}, P_{C}) from the relevant transmitter (A, B, C) depending on the time interval from the last successful reception of a data packet (P_{A}, P_{B}, P_{C}) from the transmitter to the expected reception of the next data packet, and in the sense of an extension of the duration of the tolerance time interval (T_{A}, T_{B}, T_{C}) on an increase in the time interval,
wherein the duration of the tolerance time interval (T_{A}, T_{B}, T_{C}) increases linearly depending on the time interval from the last successful data reception to the expected next data reception from a relevant transmitter.

## Revendications

1. Système de transmission de données comportant au moins un émetteur (A, B, C) et un récepteur (E) destiné à la réception de paquets de données (P_{A}, P_{B}, P_{C}) qui sont émis depuis un émetteur respectif (A, B, C) sur des intervalles de temps (X_{S}), sachant que le récepteur (E) présente un dispositif de commande temporelle (S) destiné à la commande dans le temps de son mode de réception, ledit dispositif de commande temporelle étant configuré afin d'estimer l'instant respectif de la prochaine émission de données attendue de l'émetteur (A, B, C) sur la base de valeurs de consigne (X) pour les intervalles de temps de paquets de données successifs (P_{A}, P_{B}, P_{C}) de l'émetteur concerné (A, B, C) et de commuter par intermittence le récepteur (E) en mode prêt à recevoir, à chaque fois sur un intervalle de temps de tolérance (T_{A}, T_{B}, T_{C}) qui comprend l'instant estimé, afin de recevoir le paquet de données (P_{A}, P_{B}, P_{C}), sachant que
le dispositif de commande temporelle (S) est configuré en vue de l'estimation de l'instant de la prochaine émission de données respectivement attendue de l'émetteur concerné (A, B, C) afin de corriger la valeur de consigne actuelle respective (X( + 1)) pour l'intervalle de temps entre la dernière émission de données et la prochaine émission de données attendue de l'émetteur concerné (A, B, C) au moyen d'un coefficient de correction, **caractérisé en ce que** ledit coefficient de correction dépend du rapport de l'intervalle de temps réel (X_{S}(0)) sur l'intervalle de temps de consigne (X(0)) entre l'avant-dernière et la dernière réception de données de l'émetteur, et
**en ce que** le dispositif de commande temporelle (S) est configuré afin de fixer la durée de l'intervalle de temps de tolérance (T_{A}, T_{B}, T_{C}) pour la réception d'un prochain paquet de données attendu (P_{A}, P_{B}, Pc) de l'émetteur concerné (A, B, C) en fonction de l'intervalle de temps entre la dernière réception réussie d'un paquet de données (P_{A}, P_{B}, P_{C}) de l'émetteur et la réception attendue du prochain paquet de données, c'est-à-dire au sens d'un allongement de la durée de l'intervalle de temps de tolérance (T_{A}, T_{B}, T_{C}) en cas d'augmentation de l'intervalle de temps, sachant que
la durée de l'intervalle de temps de tolérance (T_{A}, T_{B}, T_{C}) s'accroît de façon surlinéaire en fonction de l'intervalle de temps entre la dernière réception de données réussie et la prochaine réception de données attendue d'un émetteur concerné.

2. Système de transmission de données selon la revendication 1, **caractérisé en ce que** le coefficient de correction est le quotient de l'intervalle de temps effectif (X_{S}(0)) entre l'avant-dernière et la dernière réception de données réussie et l'intervalle de temps de consigne concerné (X(0)).

3. Système de transmission de données selon l'une quelconque des revendications précédentes, **caractérisé en ce que** le dispositif de commande temporelle (S) met l'intervalle de temps de tolérance (T) en asymétrie temporelle par rapport à l'instant de réception respectif estimé (t_{SOLL}) de telle manière que la partie (V) de l'intervalle de temps de tolérance (T) précédant l'instant de réception estimé (t_{SOLL}) est inférieure à la partie (N) de l'intervalle de temps de tolérance (T) suivant l'instant de réception estimé (t_{SOLL}).

4. Système de transmission de données selon l'une quelconque des revendications précédentes, **caractérisé en ce que** le dispositif de commande temporelle (S) commute le récepteur (E) en mode prêt à recevoir en continu à chaque fois pour la durée de l'intervalle de temps de tolérance (T).

5. Système de transmission de données selon l'une quelconque des revendications 1 à 3, **caractérisé en ce que** les paquets de données (P_{A}, P_{B}, P_{C}) émis par l'émetteur (A, B, C) présentent un en-tête respectif (He) et **en ce que** le dispositif de commande temporelle (S) du récepteur (E) commute le récepteur en mode prêt à recevoir pendant les intervalles de temps de tolérance (T) à chaque fois au cours d'impulsions de réception de courtes durées (Se) sur des intervalles de temps inférieurs à la durée de l'en-tête (He), jusqu'à ce qu'un en-tête concerné (He) soit reçu par le récepteur (E), et **en ce que** le dispositif de commande temporelle (S) est configuré afin de maintenir le récepteur (E), à la suite de la réception de l'en-tête (He), en mode prêt à recevoir en continu jusqu'à expiration de l'intervalle de temps de tolérance (T).

6. Système de transmission de données selon l'une quelconque des revendications précédentes, **caractérisé en ce que** le dispositif de commande temporelle (S) du récepteur (E) est configuré afin de régler l'intervalle de temps de tolérance (T) à une valeur supérieure ou égale au produit d'une tolérance temporelle relative maximale et du temps total entre la dernière réception réussie et la prochaine réception attendue, dans le cas où aucune réception réussie du paquet de données attendu (P_{A}, P_{B}, Pc) de l'émetteur concerné (A, B, C) n'a lieu sur un certain nombre d'intervalles de temps de tolérance consécutifs, en particulier sur le dernier et l'avant-dernier intervalle de temps de tolérance.

7. Système de transmission de données selon l'une quelconque des revendications précédentes, **caractérisé en ce** sur ce dernier comprend plusieurs émetteurs (A, B, C) qui sont configurés afin qu'ils émettent réciproquement à différents instants des paquets de données (P_{A}, P_{B}, P_{C}) vers le récepteur (E), dans lequel le dispositif de commande temporelle (S) du récepteur (E) estime des instants d'émission (t_{SOLL}) par rapport à chaque émetteur (A, B, C) et configure des intervalles de temps de tolérance correspondants (T_{A}, T_{B}, T_{C}).

8. Système de transmission de données selon la revendication 7, **caractérisé en ce que** l'émetteur (A, B, C) présente des moyens destinés à la commande dans le temps de son mode d'émission, qui placent les instants d'émission de telle façon qu'ils varient de façon quasi-stochastique.

9. Système de transmission de données selon l'une quelconque des revendications précédentes, **caractérisé en ce que** ce dernier fait partie d'un système d'acquisition de données de consommation et de décompte de consommation, dans lequel les émetteurs (A, B, C) sont à chaque fois affectés individuellement à un compteur de consommation respectif (a, b, c), par exemple à des répartiteurs de frais de chauffage électroniques, à des compteurs d'eau électroniques, à des calorimètres électroniques, etc., sur le site d'installation du compteur de consommation concerné et sont configurés afin d'émettre vers le récepteur des données de consommation concernées dans les paquets de données respectifs.

10. Récepteur d'un système de transmission de données destiné à la réception de paquets de données (P_{A}, P_{B}, P_{C}) qui sont émis depuis un émetteur respectif (A, B, C) sur des intervalles de temps (Xs), dans lequel le récepteur (E) présente un dispositif de commande temporelle (S) destiné à la commande dans le temps de son mode de réception, ledit dispositif de commande temporelle étant configuré afin d'estimer l'instant respectif de la prochaine émission de données attendue de l'émetteur (A, B, C) sur la base de valeurs de consigne (X) pour les intervalles de temps de paquets de données successifs (P_{A}, P_{B}, P_{C}) de l'émetteur concerné (A, B, C) et de commuter par intermittence le récepteur (E) en mode prêt à recevoir, à chaque fois sur un intervalle de temps de tolérance (T_{A}, T_{B}, T_{C}) qui comprend l'instant estimé, afin de recevoir le paquet de données (P_{A}, P_{B}, Pc), sachant que
le dispositif de commande temporelle (S) est configuré en vue de l'estimation de l'instant de la prochaine émission de données respectivement attendue de l'émetteur concerné (A, B, C) afin de corriger la valeur de consigne actuelle respective (X( + 1 )) pour l'intervalle de temps entre la dernière émission de données et la prochaine émission de données attendue de l'émetteur concerné (A, B, C) au moyen d'un coefficient de correction, **caractérisé en ce que** ledit coefficient de correction dépend du rapport de l'intervalle de temps réel (X_{S}(0)) sur l'intervalle de temps de consigne (X(0)) entre l'avant-dernière et la dernière réception de données de l'émetteur, et
**en ce que** le dispositif de commande temporelle (S) est configuré afin de fixer la durée de l'intervalle de temps de tolérance (T_{A}, T_{B}, T_{C}) pour la réception d'un prochain paquet de données attendu (P_{A}, P_{B}, P_{C}) de l'émetteur concerné (A, B, C) en fonction de l'intervalle de temps entre la dernière réception réussie d'un paquet de données (P_{A}, P_{B}, P_{C}) de l'émetteur et la réception attendue du prochain paquet de données, c'est-à-dire au sens d'un allongement de la durée de l'intervalle de temps de tolérance (T_{A}, T_{B}, T_{C}) en cas d'augmentation de l'intervalle de temps, sachant que
la durée de l'intervalle de temps de tolérance (T_{A}, T_{B}, T_{C}) s'accroît de façon surlinéaire en fonction de l'intervalle de temps entre la dernière réception de données réussie et la prochaine réception de données attendue d'un émetteur concerné.
